# FASCICULE DE BREVET EUROPEEN

(11) **EP 3 016 320 B1**
(45) Date de publication et mention de la délivrance du brevet: **12.07.2017**
(21) Numéro de dépôt: 15306679.0
(22) Date de dépôt: 20.10.2015
(51) Int. Cl.: H04L 12/28, G05B 15/02, H04L 12/24

(54) **PROCÉDÉ D'APPAIRAGE INDIRECT ET/OU DE PARAMÉTRAGE INDIRECT ET/OU DE DIAGNOSTIC INDIRECT, SYSTÈME ET ASSEMBLAGE DOMOTIQUES CONVENANT À LA MISE EN OEUVRE D'UN TEL PROCÉDÉ**
INDIREKTES PAIRING- UND/ODER PARAMETRISIERUNGSVERFAHREN UND/ODER INDIREKTES DIAGNOSEVERFAHREN, HAUSTECHNISCHES SYSTEM UND BAUTEIL, DAS FÜR DIE UMSETZUNG EINES SOLCHEN VERFAHRENS AUSGELEGT IST
METHOD FOR INDIRECT PAIRING AND/OR INDIRECT SETTING AND/OR INDIRECT DIAGNOSIS, HOME-AUTOMATION SYSTEM AND ASSEMBLY SUITABLE FOR CARRYING OUT SUCH A METHOD

(30) Priorité: 27.10.2014 FR 1460314
(43) Date de publication de la demande: 04.05.2016
(73) Titulaire: HAGER CONTROLS (Société par Actions Simplifiée), 67700 Saverne (FR)
(72) Inventeur: COURREGES, Stanis, 67330 KIRRWILLER (FR); FRICKER, Philippe, 67330 BOUXWILLER (FR); PAILLARD, Jean-Noël, 67190 DINSHEIM-SUR-BRUCHE (FR)
(74) Mandataire: Nuss, Laurent

(56) Documents cités:
- EP-A1- 2 704 365
- US-A1- 2010 283 613

## Description

La présente invention concerne le domaine des équipements pour installation domotique et a pour objet un procédé de configuration indirecte et/ou d'appairage indirect et/ou de paramétrage indirect et/ou de diagnostic indirect de produits.

Dans le monde de la gestion intelligente de l'habitat et du bâtiment, c'est-à-dire de la domotique, le système constitué par un ensemble de produits d'entrée tels que, par exemple, des interrupteurs ou des interfaces de commande et de sortie tels que des actionneurs d'éclairage, de volets roulants ou autres ouvrants, de chauffage, de climatisation, d'accès, doit être configuré par un installateur professionnel ou par l'utilisateur final dans le cas d'installations de faibles dimensions ou simples à effectuer.

En effet, l'installateur doit directement établir un lien de communication entre un dispositif de configuration, par exemple un dispositif mobile tel qu'une télécommande, pour pouvoir effectuer une configuration directe, un appairage direct, un paramétrage direct ou un diagnostic direct du produit concerné.

La configuration, l'appairage, le paramétrage et/ou le diagnostic des produits s'effectue directement par lien sans fil, c'est-à-dire par ondes hertziennes, avec le média radio utilisé pour l'actionnement des produits par exemple, pour l'Europe, à 868 MHz ou 433 MHz selon des standards ou des protocoles de communication tels que KNX, Zigbee, IO-Home Control ou par un lien entre une technologie filaire et sans fil, par exemple à partir d'une IHM.

La publication de brevet EP2704365 présente un système d'appairage de dispositifs de domotique, dans lequel une relation de contrôle est établie entre un élément mobile manipulé par l'utilisateur et un élément fixe du réseau de domotique grâce à une liaison RFID.

Dans le cas où la configuration directe, l'appairage direct, le paramétrage direct et/ou le diagnostic direct sont effectués à l'aide d'un dispositif mobile comprenant un lecteur de puce à champ de communication radiofréquence, l'installateur doit individuellement établir un lien de communication par radiofréquence directement avec chacun des produits concernés. De cette manière, les produits de l'installation domotique qui ne sont pas accessibles par le lecteur de puce à champ de communication radiofréquence du dispositif mobile, c'est-à-dire, qui se situent hors de la portée du lecteur de puce à champ de communication radiofréquence, ne peuvent être configurés, appairés, paramétrés ou diagnostiqués directement à l'aide d'un lien de communication directe.

Cette manière d'effectuer la configuration, l'appairage, le paramétrage et/ou le diagnostic des produits connus de l'art antérieur nécessite par conséquent que les produits soient accessibles. Dans le cas où les produits ne sont pas accessibles, une configuration, un appairage, un paramétrage ou un diagnostic directs des produits ne sont pas possibles, sauf à déplacer le dispositif mobile pour le rapprocher du produit, qui devient alors accessible.

A cet effet, l'invention a pour objet un procédé d'appairage indirect et/ou de paramétrage indirect et/ou de diagnostic indirect, à l'aide d'un dispositif mobile comprenant un lecteur de puce à champ de communication radiofréquence, une mémoire, un microcontrôleur, un moyen d'affichage et un moyen d'entrée, dans un système domotique comprenant au moins deux produits reliés entre eux au moyen d'un réseau domotique capable d'établir au moins un lien de communication domotique reliant les produits entre eux, chaque produit comprenant une mémoire, au moins l'un des produits étant accessible, c'est-à-dire physiquement suffisamment proche du dispositif mobile pour que le dispositif mobile (10) puisse, à l'aide de son lecteur de puce à champ de communication radiofréquence, établir un lien de communication avec le produit (A), et l'autre ou les autres produits, dit(s) produit(s) cible(s) étant accessibles ou non, procédé caractérisé en ce que le ou au moins l'un des produits accessibles comprend une puce à champ de communication radiofréquence capable d'établir un lien de communication bidirectionnelle à champ radiofréquence avec le lecteur,
ledit procédé comprenant :
dans une phase de découverte, les étapes successives suivantes qui consistent :
   a/ à approcher le lecteur du ou de l'un des produit(s) accessible(s) comprenant une puce, dit produit de communication à champ radiofréquence sollicité, pour établir avec ce dernier, le lien de communication bidirectionnelle à champ radiofréquence correspondante, et,
   b/ à effectuer, à partir du lien de communication correspondant et le réseau domotique, une découverte de ce dernier pour identifier le ou au moins l'un des produits cibles,
   c/ le cas échéant à récupérer dans la mémoire du dispositif mobile, au moyen du lien de communication radiofréquence correspondant et le réseau, des informations d'appairage et de configuration, et/ou des informations de diagnostic, et/ou des informations de paramétrage, et à afficher ces informations sur le moyen d'affichage ; puis
dans une phase d'appairage indirect et/ou de paramétrage indirect et/ou de diagnostic indirect, les étapes successives suivantes :
   d/ à réaliser, à l'aide du dispositif mobile à partir de commandes effectuées sur le moyen d'entrée, à l'aide du lien de communication bidirectionnelle et à l'aide du au moins un lien de communication domotique :
      - soit l'appairage indirecte, c'est à dire l'appairage à partir du produit de communication à champ radiofréquence sollicité par ledit dispositif, soit du ou de l'un des produits cibles avec le produit de communication à champ radiofréquence sollicité, soit de deux produits cibles entre eux,
      - soit le diagnostic indirect et/ou le paramétrage indirect, c'est-à-dire le diagnostic et/ou le paramétrage à partir du produit de communication à champ radiofréquence sollicité par ledit dispositif mobile, du produit cible ou de l'un des produits cibles.

Un produit accessible au sens de l'invention est un produit physiquement suffisamment proche du dispositif mobile pour que le dispositif mobile puisse, à l'aide de son lecteur de puce à champ de communication radiofréquence, établir un lien de communication avec le produit ou non.

Selon une possibilité, le ou les produits cibles peuvent être des produits non accessibles du réseau, pour lequel un utilisateur désire effectuer l' appairage et/ou le paramétrage et/ou le diagnostic à partir du produit de communication à champ radiofréquence sollicité.

La puce à champ de communication radiofréquence peut être, selon une caractéristique préférentielle une puce Bluetooth, une puce Bluetooth Low Energy, une puce NFC ou une puce RFID.

Selon une caractéristique préférentielle, le lecteur de puce à champ de communication radiofréquence peut être un lecteur de puce Bluetooth, un lecteur de puce Bluetooth Low Energy, un lecteur de puce NFC ou un lecteur de puce RFID.

Selon une possibilité, le lien de communication bidirectionnelle à champ radiofréquence est un lien de communication à champs proche ou à courte portée, par exemple du type NFC, RFID ou Bluetooth.

Selon une possibilité, le dispositif mobile peut être un téléphone mobile du type Smartphone ou une tablette informatique. Selon une autre possibilité, le dispositif mobile peut être un dispositif mobile dédié à la configuration et/ou au paramétrage et/ou à l'appairage d'un système domotique.

Le procédé selon l'invention présente l'avantage, qu'une configuration et/ou au paramétrage et/ou un appairage d'un système domotique peut être effectué pour chaque produit faisant partie de l'installation domotique, indépendamment du fait que le produit soit accessible ou non du moment qu'au moins un produit parmi les produits de l'installation est accessible et comprend une puce à champ de communication radiofréquence capable d'établir le lien de communication bidirectionnelle à champ radiofréquence avec le lecteur.

Selon une possibilité, dans l'étape d/, pour réaliser l'appairage indirect entre un premier produit, à savoir le ou l'un des produits cibles, et un deuxième produit, à savoir le produit de communication à champs radiofréquence sollicité ou l'autre ou l'un des autres produits cibles, le procédé peut comprendre les étapes successives suivantes qui consistent :
d1.1/ à choisir, à l'aide du dispositif mobile, en affichant les produits sur le moyen d'affichage et en choisissant le premier produit et le deuxième produit parmi les produits affichés à partir de commandes effectuées sur le moyen d'entrée, le premier produit et le deuxième produit à lier entre eux en vue de réaliser leur appairage à partir du produit de communication à champ radiofréquence sollicité,
d1.2/ le cas échéant, c'est-à-dire si la récupération des informations d'appairage et de configuration n'a pas été réalisée dans l'étape c/, à récupérer dans la mémoire du dispositif mobile, via le lien de communication radiofréquence correspondant et le réseau domotique, les informations d'appairage et de configuration des premier et deuxième produits choisis,
d1.3/ à choisir, à partir du dispositif mobile, les informations d'appairage et de configuration désirées, en affichant les informations d'appairage et de configuration sur le moyen d'affichage et en choisissant les informations d'appairage et de configuration désirées à partir de commandes effectuées sur le moyen d'entrée,
d1.4/ à transmettre, à partir de commandes effectuées sur le moyen d'entrée, les informations d'appairage et de configuration choisies au produit de communication à champ radiofréquence sollicité qui est adapté pour effectuer l'appairage du premier produit avec le deuxième produit choisis.

Ainsi, le premier produit peut identifier le deuxième produit dans le réseau domotique pour envoyer une commande du premier produit au deuxième produit et/ou pour recevoir des commandes émises par le deuxième produit à travers le réseau domotique, et le deuxième produit peut identifier le premier produit dans le réseau domotique pour envoyer une commande depuis le deuxième produit au premier produit à travers du réseau domotique et/ou pour recevoir une commande émise le premier produit à travers le réseau domotique. L'identifiant peut permettre l'identification du produit concerné dans le réseau domotique.

Selon une possibilité, le premier produit peut être appairé au deuxième produit et/ou le deuxième produit peut être appairé au premier produit.

Selon une autre caractéristique additionnelle possible, le premier produit peut être un produit de sortie et le deuxième produit est un produit d'entrée.

Selon une possibilité, les informations d'appairage et de configuration, et/ou les informations de diagnostic, et/ou les informations de paramétrage comprennent au moins un identifiant du produit concerné et/ou un descriptif caractérisant les fonctions du produit concerné.

Ainsi, la nouvelle information comprenant l'identifiant du produit concerné peut permettre à un autre produit soit d'envoyer une commande à travers le réseau domotique au produit concerné soit de recevoir les commandes émises par le produit concerné.

Selon une caractéristique additionnelle possible, un produit peut être appairé à plusieurs produits.

Selon une possibilité, le premier produit et/ou le deuxième produit peuvent être des produits d'entrée et/ou des produits de sortie. Le produit d'entrée peut être par exemple un interrupteur, une interface de commande, un capteur de mouvement. Le produit de sortie peut être par exemple un actionneur d'éclairage, un actionneur de volet roulant, une commande de chauffage, une commande de climatisation ou un dispositif de contrôle d'accès.

Selon une caractéristique additionnelle possible, le produit d'entrée peut être appairé à plusieurs produits de sortie et/ou plusieurs produits d'entrée peuvent être appairés au produit de sortie et/ou plusieurs produits d'entrée peuvent être appairés à plusieurs produits de sortie. Par exemple un seul interrupteur peut être appairé à plusieurs actionneurs d'éclairage, plusieurs interrupteurs peuvent être appairés à un seul actionneur d'éclairage et/ou plusieurs interrupteurs peuvent être appairés à plusieurs actionneurs d'éclairage.

Selon une possibilité, le premier et/ou le deuxième produit peut être simultanément un produit d'entrée et un produit de sortie. Une minuterie peut par exemple être un produit d'entrée et un produit de sortie. Une minuterie peut recevoir des commandes, par exemple d'une interface de commande pour déclencher la minuterie et peut envoyer une commande, par exemple à un actionneur d'éclairage.

Selon une caractéristique additionnelle possible, le produit ou l'au moins un des produits peut être relié à un réseau domotique à travers un lien domotique.

De façon préférentielle, le lien de communication domotique peut être effectué selon les standards ou les protocoles de communication tels que KNX, Zigbee, IO-Home Control ou par un lien entre une technologie filaire et sans fil, par exemple à partir d'une IHM.

Selon une possibilité, le produit de sortie peut être apte à envoyer une commande à un produit d'entrée à travers le réseau domotique.

Selon une caractéristique additionnelle possible, le produit d'entrée peut être apte à recevoir une commande émise par un produit de sortie à travers le réseau domotique.

Selon une possibilité, le procédé peut comprendre dans l'étape d/, pour réaliser le paramétrage indirect et/ou le diagnostic, du ou de l'un des produits accessibles ou non, les étapes successives suivantes qui consistent :
d2.1/ à choisir, à l'aide du dispositif mobile, à partir du produit de communication à champ radiofréquence sollicité, en affichant le ou au moins l'un des produits cibles sur le moyen d'affichage et en choisissant ledit produit cible parmi les produits affichés à partir de commandes effectuées sur le moyen d'entrée,
d2.3/ le cas échéant, c'est-à-dire si la récupération des informations de diagnostic et/ou de paramétrage n'a pas été réalisée dans l'étape c/, à récupérer dans la mémoire du dispositif mobile les informations du ou des produits cibles, via le lien de communication radiofréquence correspondant et le réseau,
d2.4/ à réaliser, à partir du moyen d'entrée et du moyen d'affichage, soit une nouvelle information de paramétrage et/ou de diagnostic créée sur la base de la ou des informations transmise(s) depuis le ou les produits cibles, soit une nouvelle information créée en modifiant l'information récupérée dans l'étape précédente ou dans l'étape c/, puis à transmettre ladite nouvelle information, via le lien de communication bidirectionnelle à champ radiofréquence correspondant, au produit de communication à champ radiofréquence sollicité qui est adapté pour paramétrer ou diagnostiquer, via le réseau domotique, le ou les produits cibles.

Selon une possibilité, dans l'étape d.2.4/ la ou chaque nouvelle information peut être créée sur la base de la ou d'au moins l'une des informations transmises en modifiant la ou les informations transmises à l'aide du dispositif mobile, de préférence à l'aide du moyen d'entrée du dispositif mobile par un utilisateur.

Selon une caractéristique additionnelle possible, dans l'étape d.2.4/ la ou chaque nouvelle information peut être créée en affichant la ou les informations transmises à l'aide du moyen d'affichage affichant la ou les informations transmises à l'utilisateur et en modifiant la ou les informations transmises à l'aide du moyen d'entrée pour pouvoir créer la ou les nouvelles informations.

Selon une caractéristique additionnelle possible, l'information transmise depuis le produit concerné comprend au moins un paramètre de réglage pouvant régler le fonctionnement du produit concerné et en ce que la nouvelle information peut comprendre un nouveau paramètre de réglage pouvant régler le fonctionnement du produit concerné, ledit nouveau paramètre de réglage pouvant être modifié à la demande d'un utilisateur se servant du dispositif mobile.

Selon une possibilité, le paramètre de réglage peut régler le fonctionnement du produit concerné, par exemple la durée d'un intervalle de temps d'une minuterie pendant lequel la minuterie peut envoyer une commande à un produit de sortie, un paramètre réglant la sensibilité d'un capteur de mouvement, un paramètre de réglage réglant le fonctionnement d'un thermostat.

Selon une possibilité, la puce à champ de communication radiofréquence du ou des produits peut être une puce NFC ou RFID passive ou semi-passive.

De façon préférentielle, le procédé peut consister dans l'étape a/ à approcher le dispositif mobile de la puce correspondante et à mettre en tension la puce du produit concerné à l'aide du lecteur de puce.

Selon une possibilité, le procédé peut comprendre, l'étape supplémentaire suivante qui consiste :
- avant l'étape a/ à lancer une application sur le microcontrôleur à partir de commandes effectuées sur le moyen d'entrée.

Selon une caractéristique additionnelle possible, le logiciel est lancé sur le microcontrôleur à l'aide d'une commande effectuée par l'utilisateur sur le moyen d'entrée du dispositif mobile.

Selon l'invention, il est également proposé de prévoir un système domotique comprenant au moins deux produits reliés entre eux au moyen d'un réseau domotique capable d'établir au moins un lien de communication domotique permettant de relier les produits entre eux, chaque produit comprenant une mémoire, au moins l'un des produits étant accessible, c'est-à-dire physiquement suffisamment proche d'un dispositif mobile pour que le dispositif mobile puisse, à l'aide d'un lecteur de puce à champ de communication radiofréquence, établir un lien de communication avec le produit (A), et l'autre ou les autres produits, dit(s) produit(s) cible(s) étant accessibles ou non, les produits pouvant être appairés indirectement et/ou paramétrés indirectement et/ou diagnostiqués indirectement à l'aide du procédé selon l'invention et à l'aide du dispositif mobile comprenant le lecteur de puce à champ de communication radiofréquence, une mémoire, un microcontrôleur, un moyen d'affichage et un moyen d'entrée, le ou au moins l'un des produits accessibles, dit produit de communication à champ radiofréquence sollicité, comprenant une puce à champ de communication radiofréquence capable d'établir un lien de communication bidirectionnelle à champ radiofréquence avec le lecteur, le dispositif mobile étant capable
- de lancer une application,
- d'afficher les produits du réseau sur le moyen d'affichage,
- d'effectuer, à partir du lien de communication bidirectionnelle à champ radiofréquence et le réseau domotique, une découverte de ce dernier pour identifier le ou au moins l'un des produits cibles,
- le moyen d'affichage étant capable :
- d'afficher des informations d'appairage, de configuration, de diagnostic et/ou de paramétrage,
- d'afficher une information récupérée,
- le moyen d'entrée étant capable à partir de commandes effectuées de réaliser :
- soit l'appairage indirect, c'est à dire l'appairage à partir du produit de communication à champ radiofréquence sollicité par ledit dispositif, soit du ou de l'un des produits cibles avec le produit de communication à champ radiofréquence sollicité soit de deux produits cibles entre eux,
- soit le diagnostic indirect et/ou le paramétrage indirect, c'est-à-dire le diagnostic et/ou le paramétrage à partir du produit de communication à champ radiofréquence sollicité par ledit dispositif mobile, du produit cible ou de l'un des produits cibles,
- le cas échéant, de choisir le premier produit et le deuxième produit affichés sur le moyen d'affichage,
- de choisir les informations d'appairage et de configuration désirées,
- de choisir le produit cible parmi les produits affichés sur le moyen d'affichage,
- le cas échéant, de créer la nouvelle information.

Selon une caractéristique additionnelle possible, la puce à champ de communication radiofréquence est une puce à champs de communication proche ou à courte portée, par exemple du type NFC, RFID ou Bluetooth capable d'établir un lien de communication proche ou à courte portée, par exemple du type NFC avec le lecteur.

Selon l'invention, il est également proposé de prévoir un assemblage domotique comprenant un système domotique tel que défini selon l'invention et un dispositif mobile, ledit dispositif mobile comprenant un lecteur de puce à champ de communication radiofréquence, une mémoire, un microcontrôleur, un moyen d'affichage capable d'afficher des informations et un moyen d'entrée,
le dispositif mobile étant capable, à l'aide du moyen d'entrée à partir de commandes effectuées :
- de lancer une application,
- d'afficher les produits du réseau sur le moyen d'affichage,
- de réaliser :
- soit l'appairage indirecte, c'est à dire l'appairage à partir du produit de communication à champ radiofréquence sollicité par ledit dispositif, soit du ou de l'un des produits cibles avec le produit de communication à champ radiofréquence sollicité, soit de deux produits cibles entre eux,
- soit le diagnostic indirect et/ou le paramétrage indirect, c'est-à-dire le diagnostic et/ou le paramétrage à partir du produit de communication à champ radiofréquence sollicité par ledit dispositif mobile, du produit cible ou de l'un des produits cibles,
- le cas échéant, de choisir le premier produit et le deuxième produit parmi les produits affichés sur le moyen d'affichage,
- de choisir les informations d'appairage et de configuration désirées,
- de choisir le produit cible parmi les produits affichés sur le moyen d'affichage,
- le cas échéant, de créer la nouvelle information de paramétrage et/ou de diagnostic.

Selon une caractéristique additionnelle possible, le moyen d'entrée est réalisé sous forme d'un écran tactile.

Selon une possibilité, le dispositif mobile est un téléphone du type smartphone ou une tablette informatique.

L'invention sera mieux comprise, grâce à la description ci-après, qui se rapporte à un mode de réalisation préféré, donné à titre d'exemple non limitatif, et expliqué avec référence au dessin schématique annexé, dans lequel :

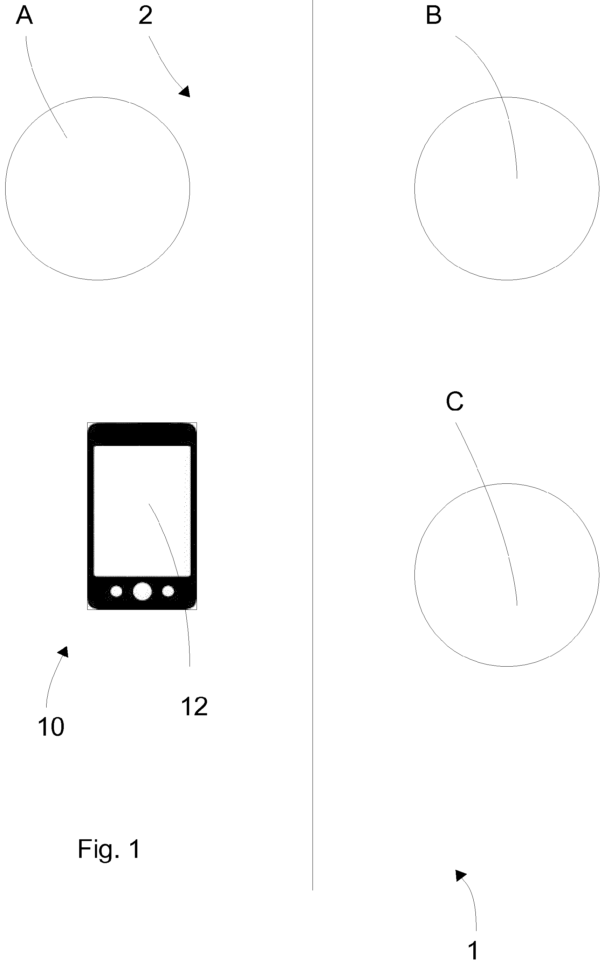

- la figure 1 montre un système domotique, comprenant trois produits, à savoir un produit de communication à champ radiofréquence sollicité et deux produits cibles, ainsi qu'un dispositif mobile selon la présente invention.

L'invention a donc tout d'abord pour objet un assemblage domotique 1 comprenant un système domotique 2. Le système domotique 2 décrit par la figure 1 comprend trois produits A, B, C, c'est-à-dire selon la présente invention au moins un produit A et un produit B ou C. L'assemblage domotique 1 comprend également un dispositif mobile 10 apte à effectuer une configuration et/ou un paramétrage et/ou un diagnostic des produits A, B, C et à appairer un premier produit A, B, C avec un deuxième produit A, B, C. Le dispositif mobile 10 comprend un lecteur de puce à champ de communication radiofréquence qui peut être, par exemple, un lecteur Bluetooth, un lecteur Bluetooth Low Energy, un lecteur de puce NFC ou un lecteur de puce RFID. Le dispositif mobile 10 comprend un microcontrôleur et une mémoire. Les produits A, B, C sont reliés entre eux au moyen d'un réseau domotique. Le réseau domotique est capable de relier au moins deux produits A, B, C en établissant au moins un lien de communication domotique.

Dans le système domotique 2 décrit par la figure 1, le produit A, dit produit A de communication à champ radiofréquence sollicité, est accessible. Les produits B, C, dits produits B, C cibles, ne sont pas accessibles. Chaque produit A, B, C comprend une mémoire. Le produit A accessible comprend une puce à champ de communication radiofréquence capable d'établir un lien de communication bidirectionnel à champ radiofréquence avec le lecteur du dispositif mobile 10.

Le dispositif mobile 10 comprend, en outre, un moyen d'entrée et un moyen de sortie, le moyen d'entrée et le moyen de sortie étant réalisés sous la forme d'un écran tactile 12. Le dispositif mobile 10 est apte à lancer une application, d'afficher les produits du réseau sur le moyen d'affichage. Le moyen d'affichage est capable d'afficher des informations d'appairage, de configuration, de diagnostic et/ou de paramétrage. Le moyen d'affichage est également apte à afficher une information récupérée.

L'assemblage domotique 1 permet d'appairer et/ou de paramétrer et/ou de diagnostiquer de façon indirecte les produits A, B, C du système domotique 2 à l'aide du procédé d'appairage indirect et/ou de paramétrage indirect et/ou de diagnostique indirect qui est également proposé selon l'invention, les produits A, B, C comprenant au moins un produit A accessible.

Le procédé propose, dans une phase de découverte, d'approcher le lecteur du ou de l'un des produits A accessibles comprenant une puce pour établir avec ce dernier, le lien de communication bidirectionnel à champ radiofréquence correspondant, et, d'effectuer, à partir du lien de communication correspondant et le réseau domotique, une découverte de ce dernier pour identifier le ou au moins l'un des produits B, C cibles du système 2 parmi le ou les autres produits accessibles ou non.

Dans la phase de découverte, le procédé propose, en outre, le cas échéant, de récupérer dans la mémoire du lecteur, au moyen du lien de communication radiofréquence correspondant et le réseau, des informations d'appairage et de configuration, et/ou des informations de diagnostic, et/ou des informations de paramétrage, et à afficher ces informations sur le moyen d'affichage.

Le procédé comprend, en outre, une phase d'appairage indirect et/ou de paramétrage indirect et/ou de diagnostic indirect. Dans cette phase, le procédé propose de réaliser à l'aide du dispositif mobile 10 à partir de commande effectuée sur le moyen d'entrée, à l'aide du lien de communication bidirectionnel et à l'aide du au moins un lien de communication domotique :
- soit l'appairage indirect, c'est-à-dire l'appairage à partir du produit de communication à champ radiofréquence sollicité A par ledit dispositif 10, soit du ou de l'un des produits cibles B, C avec le produit A de communication à champ radiofréquence sollicité, soit de deux produits B, C cibles entre eux,
- soit le diagnostic indirect et/ou le paramétrage indirect, c'est-à-dire le diagnostic et/ou le paramétrage à partir du produit de communication à champ radiofréquence sollicité par ledit dispositif mobile 10, du produit B, C cible ou de l'un des produits B, C cibles.

Le ou les produits B, C cibles peuvent être des produits B, C non accessible du réseau, pour lequel un utilisateur désire effectuer l' appairage et/ou le paramétrage et/ou le diagnostic à partir du produit A de communication à champ radiofréquence sollicité.

Pour réaliser l'appairage indirect entre un premier produit B, C, à savoir le ou l'un des produit B, C cibles , et un deuxième produit A, B, C, à savoir le produit A de communication à champ radiofréquence sollicité ou l'autre ou l'un des autres produits B, C cibles , le procédé propose les étapes successives suivantes qui consistent :
à choisir à l'aide du dispositif mobile 10, en affichant les produits sur le moyen d'affichage et en choisissant le premier produit B, C et le deuxième produit A, B, C parmi les produits affichés A, B, C à partir de commandes effectuées sur le moyen d'entrée, le premier produit B, C et le deuxième produit A, B, C à lier entre eux en vue de réaliser leur appairage à partir du produit de communication à champ radiofréquence sollicité A,
le cas échéant, c'est-à-dire si la récupération des informations d'appairage et de configuration n'a pas été réalisée dans une étape précédente, de récupérer dans la mémoire du lecteur, via le lien de communication radiofréquence correspondant et le réseau domotique, les informations d'appairage et de configuration des premier et deuxième produits A, B, C choisis,
à choisir à partir du dispositif mobile 10, les informations d'appairage et de configuration désirées, en affichant les informations d'appairage et de configuration sur le moyen d'affichage et en choisissant les informations d'appairage et de configurations désirées à partir de commandes effectuées sur le moyen d'entrée,
à transmettre à partir de commandes effectuées sur le moyen d'entrée, les informations d'appairage et de configuration choisies au produit de communication à champ radiofréquence sollicité A qui est adapté pour effectuer l'appairage du premier produit A, B, C avec le deuxième produit A, B, C choisi.

À l'aide du procédé, un utilisateur peut appairer par exemple un produit accessible A à un produit non-accessible B, C, le produit non-accessible pouvant être par exemple un produit cible B, C situé à distance de l'utilisateur, de telle sorte que le lecteur de puce à champ de communication radiofréquence du dispositif mobile 10 soit hors portée d'une éventuelle puce à champ de communication radiofréquence associée à ces produits B, C.

Le dispositif mobile 10 est alors capable, à l'aide du moyen d'entrée à partir de commandes effectuées par l'utilisateur, de choisir le premier produit B, C et le deuxième produit A, B, C parmi les produits affichés sur le moyen d'affichage, de choisir les informations d'appairage et de configuration désirées, de choisir le produit cible B, C parmi les produits affichés sur le moyen d'affichage, le cas échéant, de créer la nouvelle information de paramétrage et/ou de diagnostic.

Selon une possibilité, le procédé peut comprendre dans l'étape d/, pour réaliser le paramétrage indirect et/ou le diagnostic, du ou de l'un des produits cibles B, C, les étapes successives suivantes qui consistent :
d2.1/ à choisir, à l'aide du dispositif mobile 10, à partir du produit A de communication à champ radiofréquence sollicité, en affichant le ou au moins l'un des produits cibles B, C sur le moyen d'affichage et en choisissant ledit produit cible B, C parmi les produits A, B, C affichés à partir de commandes effectuées sur le moyen d'entrée,
d2.3/ le cas échéant, c'est-à-dire si la récupération des informations de diagnostic et/ou de paramétrage n'a pas été réalisée dans l'étape c/, à récupérer dans la mémoire du dispositif mobile 10 les informations du ou des produits B, C cibles, via le lien de communication radiofréquence correspondant et le réseau,
d2.4/ à réaliser, à partir du moyen d'entrée et du moyen d'affichage, soit une nouvelle information de paramétrage et/ou de diagnostic créée sur la base de la ou des informations transmise(s) depuis le ou les produits B, C cibles, soit une nouvelle information créée en modifiant l'information récupérée dans l'étape précédente ou dans l'étape c/, puis à transmettre ladite nouvelle information, via le lien de communication bidirectionnelle à champ radiofréquence correspondant, au produit A de communication à champ radiofréquence sollicité qui est adapté pour paramétrer ou diagnostiquer, via le réseau domotique, le ou les produits B, C cibles.

Selon une caractéristique additionnelle possible, le procédé peut comprendre l'étape supplémentaire suivante qui consiste :
- avant l'étape a/ à lancer une application sur le microcontrôleur à partir de commandes effectuées sur le moyen d'entrée.

Selon une possibilité, les informations d'appairage et de configuration, et/ou les informations de diagnostic, et/ou les informations de paramétrage peuvent comprendre au moins un identifiant du produit A, B, C concerné et/ou un descriptif caractérisant les fonctions du produit A, B, C concerné.

Pour réaliser l'appairage des produits non accessibles B, C entre eux, l'utilisateur doit, dans une phase de découverte, approcher le lecteur du produit A accessible, pour établir avec ce dernier, le lien de communication bidirectionnelle à champ radiofréquence, et, effectuer, à partir du lien de communication radiofréquence et le réseau domotique, une découverte du réseau domotique pour identifier les produits B, C non accessibles du système 2, dits produits cibles B, C.

Le dispositif mobile 10 récupère ensuite dans sa mémoire, au moyen du lien de communication radiofréquence, les informations d'appairage et affiche ces informations sur le moyen d'affichage.

Dans une phase d'appairage indirect, l'utilisateur doit choisir, à l'aide du dispositif mobile 10, en affichant les produits A, B, C sur le moyen d'affichage et en choisissant le premier produit B et le deuxième produit C, parmi les produits A, B, C affichés à partir de commandes effectuées sur le moyen d'entrée, le premier produit B et le deuxième produit C à lier entre eux en vue de réaliser leur appairage à partir du produit A.

L'utilisateur doit ensuite choisir, à partir du dispositif mobile 10, les informations d'appairage désirées, en affichant les informations d'appairage sur le moyen d'affichage et en choisissant les informations d'appairage et de configuration désirées à partir de commandes effectuées sur le moyen d'entrée. Ainsi, l'utilisateur peut choisir d'appairer le premier produit B au deuxième produit C.

Enfin, l'utilisateur doit transmettre, à partir de commandes effectuées sur le moyen d'entrée, les informations d'appairage et de configuration choisies au produit A de communication à champ radiofréquence sollicité qui est adapté pour effectuer l'appairage du premier produit B avec le deuxième produit C choisis. Ainsi, l'utilisateur réalise l'appairage des produits non accessibles B, C entre eux.

Pour réaliser le paramétrage d'un produit non accessible B, l'utilisateur doit, dans une phase de découverte, approcher le lecteur du produit A accessible, pour établir avec ce dernier, le lien de communication bidirectionnelle à champ radiofréquence, et, effectuer, à partir du lien de communication radiofréquence et le réseau domotique, une découverte de ce dernier pour identifier au moins le produit à paramétrer B, dit produit cible B.

Le dispositif mobile 10 récupère ensuite dans sa mémoire, au moyen du lien de communication radiofréquence et le réseau, des informations de paramétrage au moins du produit cible B et affiche ces informations sur le moyen d'affichage.

L'utilisateur doit ensuite, dans une phase de paramétrage indirect, choisir, à l'aide du dispositif mobile 10, à partir du produit A accessible, en affichant au moins le produit cible B sur le moyen d'affichage et en choisissant le produit cible B parmi les produits A, B, C affichés à partir de commandes effectuées sur le moyen d'entrée.

L'utilisateur réalise ensuite, à partir du moyen d'entrée et du moyen d'affichage, soit une nouvelle information de paramétrage créée sur la base de la ou des informations transmise(s) depuis le produit cible B, soit une nouvelle information créée en modifiant l'information récupérée dans l'étape précédente, puis à transmettre ladite nouvelle information, via le lien de communication bidirectionnelle à champ radiofréquence, au produit A accessible qui est adapté pour paramétrer, via le réseau domotique, le produit B cible.

Bien entendu, l'invention n'est pas limitée aux modes de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé d'appairage indirect et/ou de paramétrage indirect et/ou de diagnostic indirect, à l'aide d'un dispositif mobile (10) comprenant un lecteur de puce à champ de communication radiofréquence, une mémoire, un microcontrôleur, un moyen d'affichage et un moyen d'entrée, dans un système domotique (2) comprenant au moins deux produits (A, B ; A, C) reliés entre eux au moyen d'un réseau domotique capable d'établir au moins un lien de communication domotique reliant les produits (A, B, C) entre eux, chaque produit (A, B, C) comprenant une mémoire, au moins l'un des produits (A) étant accessible, c'est-à-dire physiquement suffisamment proche du dispositif mobile (10) pour que le dispositif mobile (10) puisse, à l'aide de son lecteur de puce à champ de communication radiofréquence, établir un lien de communication avec le produit (A), et l'autre ou les autres produits (B, C), dit(s) produit(s) (B, C) cible(s) étant accessibles ou non, **caractérisé en ce que** le ou au moins l'un des produits (A) accessibles comprend une puce à champ de communication radiofréquence capable d'établir un lien de communication bidirectionnelle à champ radiofréquence avec le lecteur,
ledit procédé comprenant :
dans une phase de découverte, les étapes successives suivantes qui consistent :
a/ à approcher le lecteur du ou de l'un des produit(s) (A) accessible(s) comprenant une puce, dit produit de communication à champ radiofréquence sollicité, pour établir avec ce dernier, le lien de communication bidirectionnelle à champ radiofréquence correspondante, et,
b/ à effectuer, à partir du lien de communication correspondant et le réseau domotique, une découverte de ce dernier pour identifier le ou au moins l'un des produits cibles,
c/ le cas échéant à récupérer dans la mémoire du dispositif mobile (10), au moyen du lien de communication radiofréquence correspondant et le réseau, des informations d'appairage et de configuration, et/ou des informations de diagnostic, et/ou des informations de paramétrage, et à afficher ces informations sur le moyen d'affichage ; puis
dans une phase d'appairage indirect et/ou de paramétrage indirect et/ou de diagnostic indirect, les étapes successives suivantes :
d/ à réaliser, à l'aide du dispositif mobile (10) à partir de commandes effectuées sur le moyen d'entrée, à l'aide du lien de communication bidirectionnelle et à l'aide du au moins un lien de communication domotique :
- soit l'appairage indirecte, c'est à dire l'appairage à partir du produit (A) de communication à champ radiofréquence sollicité par ledit dispositif (10), soit du ou de l'un des produits cibles (B, C) avec le produit (A) de communication à champ radiofréquence sollicité, soit de deux produits cibles (B, C) entre eux,
- soit le diagnostic indirect et/ou le paramétrage indirect, c'est-à-dire le diagnostic et/ou le paramétrage à partir du produit (A) de communication à champ radiofréquence sollicité par ledit dispositif mobile (10), de l'un des produits cibles (B, C).

2. Procédé, selon la revendication 1, **caractérisé en ce qu'**il comprend dans l'étape d/, pour réaliser l'appairage indirect entre un premier produit (B, C), à savoir le ou l'un des produits (B, C) cibles, et un deuxième produit (A, B, C), à savoir le produit (A) de communication à champ radiofréquence sollicité ou l'autre ou l'un des autres produits (B, C) cibles, les étapes successives suivantes qui consistent :
d1.1/ à choisir, à l'aide du dispositif mobile (10), en affichant les produits (A, B, C) sur le moyen d'affichage et en choisissant le premier produit (B, C) et le deuxième produit (A, B, C) parmi les produits (A, B, C) affichés à partir de commandes effectuées sur le moyen d'entrée, le premier produit (B, C) et le deuxième (A, B, C) produit à lier entre eux en vue de réaliser leur appairage à partir du produit (A) de communication à champ radiofréquence sollicité,
d1.2/ le cas échéant, c'est-à-dire si la récupération des informations d'appairage et de configuration n'a pas été réalisée dans l'étape c/, à récupérer dans la mémoire du dispositif mobile (10), via le lien de communication radiofréquence correspondant et le réseau domotique, les informations d'appairage et de configuration des premier et deuxième produits (A, B, C) choisis,
d1.3/ à choisir, à partir du dispositif mobile (10), les informations d'appairage et de configuration désirées, en affichant les informations d'appairage et de configuration sur le moyen d'affichage et en choisissant les informations d'appairage et de configuration désirées à partir de commandes effectuées sur le moyen d'entrée,
d1.4/ à transmettre, à partir de commandes effectuées sur le moyen d'entrée, les informations d'appairage et de configuration choisies au produit (A) de communication à champ radiofréquence sollicité qui est adapté pour effectuer l'appairage du premier produit (A, B, C) avec le deuxième produit (A, B, C) choisis.

3. Procédé selon la revendication 1, **caractérisé en ce qu'**il comprend dans l'étape d/, pour réaliser le paramétrage indirect et/ou le diagnostic, du ou de l'un des produit (B, C) cibles, les étapes successives suivantes qui consistent :
d2.1/ à choisir, à l'aide du dispositif mobile (10), à partir du produit (A) de communication à champ radiofréquence sollicité, en affichant le ou au moins l'un des produits cibles (B, C) sur le moyen d'affichage et en choisissant ledit produit cible (B, C) parmi les produits (A, B, C) affichés à partir de commandes effectuées sur le moyen d'entrée,
d2.3/ le cas échéant, c'est-à-dire si la récupération des informations de diagnostic et/ou de paramétrage n'a pas été réalisée dans l'étape c/, à récupérer dans la mémoire du dispositif mobile (10) les informations du ou des produits (B, C) cibles, via le lien de communication radiofréquence correspondant et le réseau,
d2.4/ à réaliser, à partir du moyen d'entrée et du moyen d'affichage, soit une nouvelle information de paramétrage et/ou de diagnostic créée sur la base de la ou des informations transmise(s) depuis le ou les produits (B, C) cibles, soit une nouvelle information créée en modifiant l'information récupérée dans l'étape précédente ou dans l'étape c/, puis à transmettre ladite nouvelle information, via le lien de communication bidirectionnelle à champ radiofréquence correspondant, au produit (A) de communication à champ radiofréquence sollicité qui est adapté pour paramétrer ou diagnostiquer, via le réseau domotique, le ou les produits (B, C) cibles.

4. Procédé selon l'une quelconque des revendications 1 à 3, **caractérisé en ce qu'**il comprend l'étape supplémentaire suivante qui consiste :
- avant l'étape a/ à lancer une application sur le microcontrôleur à partir de commandes effectuées sur le moyen d'entrée.

5. Procédé selon l'une quelconque des revendications 1 à 4, **caractérisé en ce que** les informations d'appairage et de configuration, et/ou les informations de diagnostic, et/ou les informations de paramétrage comprennent au moins un identifiant du produit (A, B, C) concerné et/ou un descriptif caractérisant les fonctions du produit (A, B, C) concerné.

6. Procédé selon l'une des revendications 1 à 5, **caractérisé en ce que** le lien de communication bidirectionnelle à champ radiofréquence est un lien de communication à champs proche ou à courte portée, par exemple du type NFC, RFID ou Bluetooth.

7. Système domotique comprenant un dispositif mobile (10) et au moins deux produits (A, B, C) reliés entre eux au moyen d'un réseau domotique capable d'établir au moins un lien de communication domotique permettant de relier les produits (A, B, C) entre eux, chaque produit (A, B ; A, C) comprenant une mémoire, au moins l'un des produits (A) étant accessible, c'est-à-dire physiquement suffisamment proche du dispositif mobile (10) pour que le dispositif mobile (10) puisse, à l'aide d'un lecteur de puce à champ de communication radiofréquence, établir un lien de communication avec le produit (A), et l'autre ou les autres produits (B, C), dit(s) produit(s) (B, C) cible(s) étant accessibles ou non, les produits pouvant être appairés indirectement et/ou paramétrés indirectement et/ou diagnostiqués indirectement à l'aide du procédé selon l'une des revendications 1 à 6 et à l'aide du dispositif mobile (10) comprenant le lecteur de puce à champ de communication radiofréquence, une mémoire, un microcontrôleur, un moyen d'affichage et un moyen d'entrée, le ou au moins l'un des produits (A) accessibles, dit produit de communication à champ radiofréquence sollicité, comprenant une puce à champ de communication radiofréquence capable d'établir un lien de communication bidirectionnelle à champ radiofréquence avec le lecteur, le dispositif mobile (10) étant capable
- de lancer une application,
- d'afficher les produits (A, B, C) du réseau sur le moyen d'affichage,
- d'effectuer, à partir du lien de communication bidirectionnelle à champ radiofréquence et le réseau domotique, une découverte de ce dernier pour identifier le ou au moins l'un des produits cibles,
- le moyen d'affichage étant capable :
- d'afficher des informations d'appairage, de configuration, de diagnostic et/ou de paramétrage,
- d'afficher une information récupérée,
- le moyen d'entrée étant capable à partir de commandes effectuées de réaliser :
- soit l'appairage indirect, c'est à dire l'appairage à partir du produit (A) de communication à champ radiofréquence sollicité par ledit dispositif (10), soit du ou de l'un des produits cibles (B, C) avec le produit (A) de communication à champ radiofréquence sollicité, soit de deux produits cibles (B, C) entre eux,
- soit le diagnostic indirect et/ou le paramétrage indirect, c'est-à-dire le diagnostic et/ou le paramétrage à partir du produit (A) de communication à champ radiofréquence sollicité par ledit dispositif mobile (10), de l'un des produits cibles (B, C),
- le cas échéant pour réaliser un appairage indirect entre un premier produit (B, C), à savoir le ou l'un des produits (B, C) cibles, et un deuxième produit (A, B, C), à savoir le produit (A) de communication à champ radiofréquence sollicité ou l'autre ou l'un des autres produits (B, C) cibles, selon les étapes successives suivantes qui consistent :
d1.1/ à choisir, à l'aide du dispositif mobile (10), en affichant les produits (A, B, C) sur le moyen d'affichage et en choisissant le premier produit (B, C) et le deuxième produit (A, B, C) parmi les produits (A, B, C) affichés à partir de commandes effectuées sur le moyen d'entrée, le premier produit (B, C) et le deuxième (A, B, C) produit à lier entre eux en vue de réaliser leur appairage à partir du produit (A) de communication à champ radiofréquence sollicité,
d1.2/ le cas échéant, c'est-à-dire si la récupération des informations d'appairage et de configuration n'a pas été réalisée dans l'étape c/, à récupérer dans la mémoire du dispositif mobile (10), via le lien de communication radiofréquence correspondant et le réseau domotique, les informations d'appairage et de configuration des premier et deuxième produits (A, B, C) choisis,
d1.3/ à choisir, à partir du dispositif mobile (10), les informations d'appairage et de configuration désirées, en affichant les informations d'appairage et de configuration sur le moyen d'affichage et en choisissant les informations d'appairage et de configuration désirées à partir de commandes effectuées sur le moyen d'entrée,
d1.4/ à transmettre, à partir de commandes effectuées sur le moyen d'entrée, les informations d'appairage et de configuration choisies au produit (A) de communication à champ radiofréquence sollicité qui est adapté pour effectuer l'appairage du premier produit (A, B, C) avec le deuxième produit (A, B, C) choisis.
- de choisir le premier produit (A, B, C) et le deuxième produit (A, B, C) affichés sur le moyen d'affichage,
- de choisir les informations d'appairage et de configuration désirées,
- de choisir le produit (B, C) cible parmi les produits (A, B, C) affichés sur le moyen d'affichage,
- le cas échéant, de créer à partir du moyen d'entrée et du moyen d'affichage, soit une nouvelle information de paramétrage et/ou de diagnostic créée sur la base de la ou des informations transmise(s) depuis le ou les produits (B, C) cibles, soit une nouvelle information créée en modifiant l'information récupérée dans une étape consitant à récupérer dans la mémoire du dispositif mobile (10), au moyen du lien de communication radiofréquence correspondant et le réseau, des informations d'appairage et de configuration, et/ou des informations de diagnostic, et/ou des informations de paramétrage, et à afficher ces informations sur le moyen d'affichage ou dans une étape consistant à, si la récupération des informations de diagnostic et/ou de paramétrage n'a pas été réalisée conformément à l'étape précité, à récupérer dans la mémoire du dispositif mobile (10) les informations du ou des produits (B, C) cibles, via le lien de communication radiofréquence correspondant et le réseau, puis à transmettre ladite nouvelle information, via le lien de communication bidirectionnelle à champ radiofréquence correspondant, au produit (A) de communication à champ radiofréquence sollicité qui est adapté pour paramétrer ou diagnostiquer, via le réseau domotique, le ou les produits (B, C) cibles.

8. Système domotique selon la revendication 7, **caractérisé en ce que** la puce à champ de communication radiofréquence est une puce à champs de communication proche ou à courte portée, par exemple du type NFC, RFID ou Bluetooth capable d'établir un lien de communication proche ou à courte portée, par exemple du type NFC avec le lecteur.

9. Système domotique selon la revendication 7, **caractérisé en ce que** le moyen d'entrée est réalisé sous forme d'un écran tactile (12).

10. Système domotique selon l'une des revendications 7 ou 9, **caractérisé en ce que** le dispositif mobile (10) est un téléphone du type smartphone ou une tablette informatique.

## Patentansprüche

1. Verfahren zum indirekten Koppeln und/oder zur indirekten Parametrierung und/oder zur indirekten Diagnostik unter Verwendung einer mobilen Vorrichtung (10), umfassend ein Lesegerät für einen Funkkommunikationsfeld-Chip, einen Speicher, einen Mikrocontroller, ein Anzeigemittel und ein Eingabemittel, in einem Hausautomationssystem (2), umfassend mindestens zwei Produkte (A, B ; A, C), die miteinander mittels eines Hausautomationsnetzes verbunden sind, das geeignet ist, mindestens eine Kommunikationsverbindung für Hausautomationstechnik einzurichten, durch die die Produkte (A, B, C) miteinander verbunden werden, wobei jedes Produkt (A, B, C) einen Speicher umfasst, mindestens eines der Produkte (A) zugänglich ist, d. h. sich physisch ausreichend nahe der mobilen Vorrichtung (10) befindet, sodass die mobile Vorrichtung (10) dazu in der Lage ist, unter Verwendung ihres Lesegeräts für einen Funkkommunikationsfeld-Chip eine Kommunikationsverbindung mit dem Produkt (A) und dem oder den anderen Produkt(en) (B, C) einzurichten, egal ob das/die Zielprodukt(e) (B, C) zugänglich sind oder nicht, **dadurch gekennzeichnet, dass** das zugängliche oder zumindest eines der zugänglichen Produkt(e) (A) einen Funkkommunikationsfeld-Chip umfasst, der geeignet ist, eine bidirektionale RF-Feld-Kommunikationsverbindung mit dem Lesegerät einzurichten,
wobei das Verfahren umfasst:
in einer Erkennungsphase die folgenden aufeinander folgenden Schritte, bestehend aus:
a/ Annähern an das Lesegerät des zugänglichen, einen Chip umfassenden Produktes bzw. eines dieser Produkte (A), welches über RF-Kommunikation angesprochen wird, um mit diesem die bidirektionale Kommunikationsverbindung mit entsprechendem RF-Feld einzurichten, und,
b/ ausgehend von der entsprechenden Kommunikationsverbindung und dem Hausautomationsnetz, Durchführen einer Erkennung von letzterem, um das oder zumindest eines der Zielprodukt(e) zu identifizieren,
c/ gegebenenfalls Abrufen der Informationen zum Koppeln und Konfiguration und/oder der Diagnoseinformationen und/oder der Informationen zur Parametrierung in den Speicher der mobilen Vorrichtung (10) mittels der entsprechenden Funkkommunikationsverbindung und des Netzes, und Anzeigen dieser Informationen auf dem Anzeigemittel; dann
in einer Phase des indirekten Koppelns und/oder der indirekten Parametrierung und/oder der indirekten Diagnostik die folgenden aufeinander folgenden Schritte:
d/ unter Verwendung der mobilen Vorrichtung (10) auf der Grundlage von über das Eingabemittel ausgeübten Befehlen, unter Verwendung der wechselseitigen Kommunikationsverbindung und unter Verwendung der mindestens einen Kommunikationsverbindung für Hausautomationstechnik, Ausführen von:
- entweder des indirekten Koppelns, d. h. des Koppelns ausgehend von dem über die RF-Feld-Kommunikation angesprochenen Produkt (A) durch die Vorrichtung (10), entweder des oder eines der Zielprodukte(s) (B, C) mit dem über die RF-Feld-Kommunikation angesprochenen Produkt (A) oder zweier Zielprodukte (B, C) untereinander,
- oder der indirekten Diagnostik und/oder der indirekten Parametrierung, d. h. der Diagnostik und/oder der Parametrierung ausgehend von dem über die RF-Feld-Kommunikation angesprochenen Produkt (A) durch die mobile Vorrichtung (10), des einen der Zielprodukte (B, C).

2. Verfahren nach Anspruch 1,
**dadurch gekennzeichnet,**
**dass** es im Schritt d/ zum Ausführen des indirekten Koppelns zwischen einem ersten Produkt (B, C), d. h. dem oder einem der Zielprodukt(e) (B, C), und einem zweiten Produkt (A, B, C), d. h. dem über die RF-Feld-Kommunikation angefragten Produkt (A) oder dem anderen bzw. einem der anderen Zielprodukt(e) (B, C), die folgenden aufeinanderfolgenden Schritte umfasst, beinhaltend:
dl.1/ Auswählen, unter Verwendung der mobilen Vorrichtung (10), durch Anzeigen der Produkte (A, B, C) auf dem Anzeigemittel und durch Auswählen des ersten Produkts (B, C) und des zweiten Produkts (A, B, C) aus den Produkten (A, B, C), die auf der Grundlage von über das Eingabemittel ausgeübten Befehlen angezeigt werden, des ersten Produkts (B, C) und des zweiten (A, B, C) Produkts, die miteinander zu verbinden sind zum Zwecke der Durchführung ihres Koppelns ausgehend von dem über die RF-Feld-Kommunikation angesprochenen Produkt (A),
dl.2/gegebenenfalls, d. h. wenn das Abrufen der Informationen zum Koppeln und Konfiguration nicht im Schritt c/ ausgeführt wurde, Abrufen der Informationen zum Koppeln und Konfiguration der ausgewählten ersten und zweiten Produkte (A, B, C) im Speicher der mobilen Vorrichtung (10), über die entsprechende Funkkommunikationsverbindung und das Hausautomationsnetz,
dl.3/Auswählen, auf Grundlage der mobilen Vorrichtung (10), der gewünschten Informationen zum Koppeln und Konfiguration, durch Anzeigen der Informationen zum Koppeln und Konfiguration auf dem Anzeigemittel und durch Auswählen der gewünschten Informationen zum Koppeln und Konfiguration auf der Grundlage von über das Eingabemittel ausgeübten Befehlen,
dl.4/ Übertragen, auf der Grundlage von über das Eingabemittel ausgeübten Befehlen, der gewählten Informationen zum Koppeln und Konfiguration zum über die RF-Feld-Kommunikation dem angesprochenen Produkt (A), das dazu ausgelegt ist, das Koppeln des gewählten ersten Produkts (A, B, C) mit dem gewählten zweiten Produkt (A, B, C) zu bewirken.

3. Verfahren nach Anspruch 1,
**dadurch gekennzeichnet,**
**dass** es im Schritt d/ zum Ausführen der indirekten Parametrierung und/oder der Diagnostik des oder eines der Zielprodukte(s) (B, C), die folgenden aufeinanderfolgenden Schritte umfasst, beinhaltend:
d2.1/Auswählen, unter Verwendung der mobilen Vorrichtung (10), ausgehend von dem über die RF-Feld-Kommunikation angesprochenen Produkt (A), durch Anzeigen des oder mindestens eines der Zielprodukte(s) (B, C) auf dem Anzeigemittel und durch Auswählen des Zielprodukts (B, C) aus den Produkten (A, B, C), die auf der Grundlage von über das Eingabemittel ausgeübten Befehlen angezeigt werden,
d2.3/ gegebenenfalls, d. h. wenn das Abrufen der Informationen zur Diagnostik und/oder zur Parametrierung nicht im Schritt c/ ausgeführt wurde, Abrufen der Informationen des oder der Zielprodukte(s) (B, C) in den Speicher der mobilen Vorrichtung (10) über die entsprechende Funkkommunikationsverbindung und das Netz,
d2.4/ Bereitstellen, auf der Grundlage des Eingabemittels und des Anzeigemittels, entweder einer neuen Information der Parametrierung und/oder der Diagnostik, die auf der Grundlage der Information(en), die von dem oder den Zielprodukt(en) (B, C) übertragen wurde(n), geschaffen wurde, oder einer neuen Information, die durch Modifizierung der abgerufenen Information in dem vorangehenden Schritt oder dem Schritt c/ geschaffen wurde, und dann Übertragen der neuen Information über die bidirektionale Kommunikationsverbindung mit dem entsprechenden RF-Feld, zu dem über die RF-Feld-Kommunikation angesprochenen Produkt (A) , das zur Parametrierung und Diagnose des oder der Zielprodukte(s) (B, C) über das Hausautomationsnetz ausgelegt ist.

4. Verfahren nach einem der Ansprüche 1 bis 3,
**dadurch gekennzeichnet,**
**dass** es den folgenden zusätzlichen Schritt umfasst, beinhaltend:
- vor dem Schritt a/ Starten einer Anwendung auf dem Mikrocontroller auf der Grundlage von über das Eingabemittel ausgeübten Befehlen.

5. Verfahren nach einem der Ansprüche 1 bis 4,
**dadurch gekennzeichnet,**
**dass** die Informationen zum Koppeln und Konfiguration und/oder die Informationen zur Diagnostik und/oder die Informationen zur Parametrierung mindestens eine Kennung des betreffenden Produkts (A, B, C) und/oder eine Beschreibung, die die Funktionen des betreffenden Produkts (A, B, C) charakterisiert, umfassen.

6. Verfahren nach einem der Ansprüche 1 bis 5,
**dadurch gekennzeichnet,**
**dass** es sich bei der bidirektionalen RF-Feld-Kommunikationsverbindung um eine Kommunikationsverbindung für Nahfeld oder kurze Reichweiten handelt, beispielsweise vom Typ NFC, RFID oder Bluetooth.

7. Heimsystem, umfassend eine mobile Vorrichtung (10) und mindestens zwei Produkte (A, B, C), die miteinander mittels eines Hausautomationsnetzes verbunden sind, das geeignet ist, mindestens eine Kommunikationsverbindung für Hausautomationstechnik einzurichten, die es ermöglicht, die Produkte (A, B, C) untereinander zu verbinden, wobei jedes Produkt (A, B; A, C) einen Speicher umfasst, mindestens eines der Produkte (A) zugänglich ist, d. h. physisch ausreichend nahe der mobilen Vorrichtung (10), sodass die mobile Vorrichtung (10) dazu in der Lage ist, unter Verwendung ihres Lesegeräts für einen Funkkommunikationsfeld-Chip eine Kommunikationsverbindung mit dem Produkt (A) und dem/den anderen Produkt(en) (B, C) einzurichten, egal ob das/die Zielprodukt(e) (B, C) zugänglich sind oder nicht, wobei die Produkte indirekt gekoppelt und/oder indirekt parametriert und/oder indirekt diagnostiziert werden können, unter Verwendung des Verfahrens nach einem der Ansprüche 1 bis 6 und unter Verwendung der mobilen Vorrichtung (10), umfassend ein Lesegerät für einen Funkkommunikationsfeld-Chip, einen Speicher, einen Mikrocontroller, ein Anzeigemittel und ein Eingabemittel, wobei das oder mindestens eines der zugängliche(n) Produkt(e) (A), d. h. über die RF-Feld-Kommunikation angesprochene Produkt, einen Chip für Funkkommunikationsfelder umfasst, der geeignet ist, eine wechselseitige RF-Feld-Kommunikationsverbindung mit dem Lesegerät einzurichten, wobei die mobile Vorrichtung (10) in der Lage ist,
- eine Anwendung zu starten,
- die Produkte (A, B, C) des Netzes auf einem Anzeigemittel anzuzeigen,
- ausgehend von der bidirektionalen RF-Feld-Kommunikationsverbindung und dem Hausautomationsnetz eine Erkennung des letztgenannten durchzuführen, um das bzw. mindestens eins der Zielprodukt(e) zu identifizieren,
- wobei das Anzeigemittel in der Lage ist:
- die Informationen zum Koppeln, zur Konfiguration, zur Diagnostik und/oder zur Parametrierung anzuzeigen,
- eine abgerufene Information anzuzeigen,
- wobei das Eingabemittel auf Grundlage ausgeführter Befehle in der Lage ist, Folgendes durchzuführen:
- entweder das indirekte Koppeln, d. h. das Koppeln ausgehend von dem über die RF-Feld-Kommunikation angesprochenen Produkt (A) durch die Vorrichtung (10), entweder des oder eines der Zielprodukte(s) (B, C) mit dem über die RF-Feld-Kommunikation angesprochenen Produkt (A) oder der zwei Zielprodukte (B, C) untereinander,
- oder die indirekte Diagnostik und/oder die indirekte Parametrierung, d. h. die Diagnostik und/oder die Parametrierung ausgehend von dem über die RF-Feld-Kommunikation angesprochenen Produkt (A) durch die mobile Vorrichtung (10), eines der Zielprodukte (B, C),
- gegebenenfalls zum Ausführen eines indirekten Koppelns zwischen einem ersten Produkt (B, C), d. h. das oder eines der Zielprodukt(e) (B, C), und einem zweiten Produkt (A, B, C), d. h. das über die RF-Feld-Kommunikation angesprochene Produkt (A) oder dem anderen bzw. einem der anderen Zielprodukt(e) (B, C), gemäß den folgenden aufeinanderfolgenden Schritten, beinhaltend:
dl.1/ Auswählen, unter Verwendung der mobilen Vorrichtung (10), durch Anzeigen der Produkte (A, B, C) auf dem Anzeigemittel und durch Auswählen des ersten Produkts (B, C) und des zweiten Produkts (A, B, C) aus den Produkten (A, B, C), die auf der Grundlage von über das Eingabemittel ausgeübten Befehlen angezeigt werden, des ersten Produkts (B, C) und des zweiten (A, B, C) Produkts, die miteinander zu verbinden sind zum Zwecke des Durchführens ihres Koppelns ausgehend von dem über die RF-Feld-Kommunikation angesprochenen Produkt (A),
dl.2/gegebenenfalls, d. h. wenn das Abrufen der Informationen zum Koppeln und Konfiguration nicht im Schritt c/ ausgeführt wurde, Abrufen der Informationen zum Koppeln und Konfiguration der ausgewählten ersten und zweiten Produkte (A, B, C) im Speicher der mobilen Vorrichtung (10) über die entsprechende Funkkommunikationsverbindung und das Hausautomationsnetz,
dl.3/Auswählen, auf Grundlage der mobilen Vorrichtung (10), der gewünschten Informationen zum Koppeln und Konfiguration, durch Anzeigen der Informationen zum Koppeln und Konfiguration auf dem Anzeigemittel und durch Auswählen der gewünschten Informationen zum Koppeln und Konfiguration auf der Grundlage von über das Eingabemittel ausgeübten Befehlen,
dl.4/Übertragen, auf der Grundlage von über das Eingabemittel ausgeübten Befehlen, der gewählten Informationen zum Koppeln und Konfiguration zu dem über die RF-Feld-Kommunikation angesprochenen Produkt (A), das dazu ausgelegt ist, das Koppeln des gewählten ersten Produkts (A, B, C) mit dem gewählten zweiten Produkt (A, B, C) zu bewirken.
- Auswählen des ersten Produkts (A, B, C) und des zweiten Produkt (A, B, C), die auf dem Anzeigemittel angezeigt werden,
- Auswählen der gewünschten Informationen zum Koppeln und Konfiguration,
- Auswählen des Zielprodukts (B, C) aus den Produkten (A, B, C), die auf dem Anzeigemittel angezeigt werden,
- gegebenenfalls Erstellen, auf der Grundlage des Eingabemittels und des Anzeigemittels, entweder einer neuen Information der Parametrierung und/oder der Diagnostik, die auf der Grundlage der Information(en), die von dem oder den Zielprodukt(en) (B, C) übertragen wurde(n), geschaffen wurde, oder einer neuen Information, die durch Modifizierung der abgerufenen Information in einem Schritt, der darin besteht, im Speicher der mobilen Vorrichtung (10) mittels der entsprechenden Funkkommunikationsverbindung und des Netzes Informationen zum Koppeln und Konfiguration und/oder Informationen zur Diagnostik und/oder Informationen zur Parametrierung abzurufen und diese Informationen auf dem Anzeigemittel anzuzeigen, oder einem Schritt, der darin besteht, wenn das Abrufen der Informationen zur Diagnostik und/oder zur Parametrierung nicht gemäß dem vorgenannten Schritt durchgeführt wurde, im Speicher der mobilen Vorrichtung (10) die Informationen des oder der Zielprodukte(s) (B, C) über die entsprechende Funkkommunikationsverbindung und das Netz abzurufen, und dann die neue Information über die entsprechende bidirektionale RF-Feld-Kommunikationsverbindung zu dem über die RF-Feld-Kommunikation angesprochenen Produkt (A) zu übertragen, das zur Parametrierung und Diagnose des oder der Zielprodukte(s) (B, C) über das Hausautomationsnetz ausgelegt ist.

8. Heimsystem nach Anspruch 7,
**dadurch gekennzeichnet,**
**dass** es sich bei dem Chip für das Funkkommunikationsfeld um einen Chip für Nahfeldkommunikation oder kurze Reichweiten handelt, beispielsweise vom Typ NFC, RFID oder Bluetooth, der geeignet ist, eine Kommunikationsverbindung für Nahfeld oder kurze Reichweiten einzurichten, beispielsweise vom Typ NFC mit dem Lesegerät.

9. Heimsystem nach Anspruch 7,
**dadurch gekennzeichnet,**
**dass** das Eingabemittel in Form eines berührungsempfindlichen Bildschirms (12) ausgeführt ist.

10. Heimsystem nach einem der Ansprüche 7 oder 9,
**dadurch gekennzeichnet,**
**dass** es sich bei der mobilen Vorrichtung (10) um ein Telefon vom Typ Smartphone oder einen Tablet-Computer handelt.

## Claims

1. Method of indirect pairing and/or of indirect parametrization and/or of indirect diagnosis, with the aid of a mobile device (10) comprising a radiofrequency communication field chip reader, a memory, a microcontroller, a display means and an input means, in a home-automation system (2) comprising at least two products (A, B; A, C) connected together by means of a home-automation network capable of establishing at least one home-automation communication link connecting the products (A, B, C) together, each product (A, B, C) comprising a memory, at least one of the products (A) being accessible, that is to say physically near enough to the mobile device (10) for the mobile device (10) to be able, with the aid of its radiofrequency communication field chip reader, to establish a communication link with the product (A) and the other product or products (B, C), termed the target product(s) (B, C), being accessible or not, **characterized in that** the accessible product or at least one of the accessible products (A) comprises a radiofrequency communication field chip capable of establishing a radiofrequency field bidirectional communication link with the reader,
the said method comprising:
in a discovery phase, the following successive steps which consist:
a/ in bringing the reader near to the or to one of the accessible product(s) (A) comprising a chip, termed the radiofrequency field communication product invoked, so as to establish, with the latter, the corresponding radiofrequency field bidirectional communication link, and,
b/ in performing, on the basis of the corresponding communication link and the home-automation network, a discovery of the latter so as to identify the target product or at least one of the target products,
c/ if appropriate in recovering in the memory of the mobile device (10), by means of the corresponding radiofrequency communication link and the network, pairing and configuration information items, and/or diagnosis information items, and/or parametrization information items, and in displaying these information items on the display means; and then
in a phase of indirect pairing and/or of indirect parametrization and/or of indirect diagnosis, the following successive steps:
d/ in carrying out, with the aid of the mobile device (10) on the basis of commands performed on the input means, with the aid of the bidirectional communication link and with the aid of the at least one home-automation communication link:
- either the indirect pairing, that is to say the pairing on the basis of the radiofrequency field communication product (A) invoked by the said device (10), of the target product or of one of the target products (B, C) with the radiofrequency field communication product (A) invoked, or of two target products (B, C) together,
- or the indirect diagnosis and/or the indirect parametrization, that is to say the diagnosis and/or the parametrization on the basis of the radiofrequency field communication product (A) invoked by the said mobile device (10), of one of the target products (B, C).

2. Method according to Claim 1, **characterized in that** it comprises in step d/, in order to carry out the indirect pairing between a first product (B, C), namely the target product or one of the target products (B, C), and a second product (A, B, C), namely the radiofrequency field communication product (A) invoked or the other target product or one of the other target products (B, C), the following successive steps which consist:
d1.1/ in choosing, with the aid of the mobile device (10), by displaying the products (A, B, C) on the display means and by choosing the first product (B, C) and the second product (A, B, C) from among the products (A, B, C) displayed on the basis of commands performed on the input means, the first product (B, C) and the second (A, B, C) product to be linked together with a view to carrying out their pairing on the basis of the radiofrequency field communication product (A) invoked,
d1.2/ if appropriate, that is to say if the recovery of the pairing and configuration information items has not been carried out in step c/, in recovering in the memory of the mobile device (10), via the corresponding radiofrequency communication link and the home-automation network, the pairing and configuration information items of the chosen first and second products (A, B, C),
d1.3/ in choosing, on the basis of the mobile device (10), the desired pairing and configuration information items, by displaying the pairing and configuration information items on the display means and by choosing the pairing and configuration information items desired on the basis of commands performed on the input means,
d1.4/ in transmitting, on the basis of commands performed on the input means, the chosen pairing and configuration information items to the radiofrequency field communication product (A) invoked which is adapted to perform the pairing of the chosen first product (A, B, C) with the chosen second product (A, B, C).

3. Method according to Claim 1, **characterized in that** it comprises in step d/, in order to carry out the indirect parametrization and/or the diagnosis, of the target product or of one of the target products (B, C), the following successive steps which consist:
d2.1/ in choosing, with the aid of the mobile device (10), on the basis of the radiofrequency field communication product (A) invoked, by displaying the target product or at least one of the target products (B, C) on the display means and by choosing the said target product (B, C) from among the products (A, B, C) displayed on the basis of commands performed on the input means,
d2.3/ if appropriate, that is to say if the recovery of the diagnosis and/or parametrization information items has not been carried out in step c/, in recovering in the memory of the mobile device (10) the information items of the target product or products (B, C), via the corresponding radiofrequency communication link and the network,
d2.4/ in producing, on the basis of the input means and of the display means, either a new parametrization and/or diagnosis information item created on the basis of the information item or items transmitted from the target product or products (B, C), or a new information item created by modifying the information item recovered in the previous step or in step c/, and then in transmitting the said new information item, via the corresponding radiofrequency field bidirectional communication link, to the radiofrequency field communication product (A) invoked which is adapted to parametrize or diagnose, via the home-automation network, the target product or products (B, C).

4. Method according to any one of Claims 1 to 3, **characterized in that** it comprises the following additional step which consists:
- before step a/ in launching an application on the microcontroller on the basis of commands performed on the input means.

5. Method according to any one of Claims 1 to 4, **characterized in that** the pairing and configuration information items, and/or the diagnosis information items, and/or the parametrization information items comprise at least one identifier of the product (A, B, C) concerned and/or a descriptor characterizing the functions of the product (A, B, C) concerned.

6. Method according to one of Claims 1 to 5, **characterized in that** the radiofrequency field bidirectional communication link is a communication link with near or short-range fields, for example of the NFC, RFID or Bluetooth type.

7. Home-automation system comprising a mobile device (10) and at least two products (A, B, C) connected together by means of a home-automation network capable of establishing at least one home-automation communication link making it possible to connect the products (A, B, C) together, each product (A, B; A, C) comprising a memory, at least one of the products (A) being accessible, that is to say physically near enough to the mobile device (10) for the mobile device (10) to be able, with the aid of a radiofrequency communication field chip reader, to establish a communication link with the product (A) and the other product or products (B, C), termed the target product(s) (B, C), being accessible or not, the products being able to be paired indirectly and/or parametrized indirectly and/or diagnosed indirectly with the aid of the method according to one of Claims 1 to 6 and with the aid of the mobile device (10) comprising the radiofrequency communication field chip reader, a memory, a microcontroller, a display means and an input means, the accessible product or at least one of the accessible products (A), termed the radiofrequency field communication product invoked, comprising a radiofrequency communication field chip capable of establishing a radiofrequency field bidirectional communication link with the reader, the mobile device (10) being capable
- of launching an application,
- of displaying the products (A, B, C) of the network on the display means,
- of performing, on the basis of the radiofrequency field bidirectional communication link and the home-automation network, a discovery of the latter so as to identify the target product or at least one of the target products,
- the display means being capable:
- of displaying pairing, configuration, diagnosis and/or parametrization information items,
- of displaying a recovered information item,
- the input means being capable on the basis of commands performed of carrying out:
- either the indirect pairing, that is to say the pairing on the basis of the radiofrequency field communication product (A) invoked by the said device (10), or of the target product or of one of the target products (B, C) with the radiofrequency field communication product (A) invoked, or of two target products (B, C) together,
- or the indirect diagnosis and/or the indirect parametrization, that is to say the diagnosis and/or the parametrization on the basis of the radiofrequency field communication product (A) invoked by the said mobile device (10), of one of the target products (B, C),
- if appropriate in order to carry out an indirect pairing between a first product (B, C), namely the target product or one of the target products (B, C), and a second product (A, B, C), namely the radiofrequency field communication product (A) invoked or the other target product or one of the other target products (B, C), according to the following successive steps which consist:
d1.1/ in choosing, with the aid of the mobile device (10), by displaying the products (A, B, C) on the display means and by choosing the first product (B, C) and the second product (A, B, C) from among the products (A, B, C) displayed on the basis of commands performed on the input means, the first product (B, C) and the second (A, B, C) product to be linked together with a view to carrying out their pairing on the basis of the radiofrequency field communication product (A) invoked,
d1.2/ if appropriate, that is to say if the recovery of the pairing and configuration information items has not been carried out in step c/, in recovering in the memory of the mobile device (10), via the corresponding radiofrequency communication link and the home-automation network, the pairing and configuration information items of the chosen first and second products (A, B, C),
d1.3/ in choosing, on the basis of the mobile device (10), the desired pairing and configuration information items, by displaying the pairing and configuration information items on the display means and by choosing the pairing and configuration information items desired on the basis of commands performed on the input means,
d1.4/ in transmitting, on the basis of commands performed on the input means, the chosen pairing and configuration information items to the radiofrequency field communication product (A) invoked which is adapted to perform the pairing of the chosen first product (A, B, C) with the chosen second product (A, B, C).
- of choosing the first product (A, B, C) and the second product (A, B, C) displayed on the display means,
- of choosing the desired pairing and configuration information items,
- of choosing the target product (B, C) from among the products (A, B, C) displayed on the display means,
- if appropriate, of creating on the basis of the input means and of the display means, either a new parametrization and/or diagnosis information item created on the basis of the information item or items transmitted from the target product or products (B, C), or a new information item created by modifying the information item recovered in a step consisting in recovering in the memory of the mobile device (10), by means of the corresponding radiofrequency communication link and the network, pairing and configuration information items, and/or diagnosis information items, and/or parametrization information items, and in displaying these information items on the display means or in a step consisting in, if the recovery of the diagnosis and/or parametrization information items has not been carried out in the aforesaid step, in recovering in the memory of the mobile device (10) the information items of the target product or products (B, C), via the corresponding radiofrequency communication link and the network, and then in transmitting the said new information item, via the corresponding radiofrequency field bidirectional communication link, to the radiofrequency field communication product (A) invoked which is adapted to parametrize or diagnose, via the home-automation network, the target product or products (B, C).

8. Home-automation system according to Claim 7, **characterized in that** the radiofrequency communication field chip is a chip with near or short-range communication fields, for example of the NFC, RFID or Bluetooth type, capable of establishing a near or short-range communication link, for example of the NFC type, with the reader.

9. Home-automation system according to Claim 7, **characterized in that** the input means is embodied in the form of a touchscreen (12).

10. Home-automation system according to one of Claims 7 or 9, **characterized in that** the mobile device (10) is a telephone of the smartphone type or a computer tablet.
